# EUROPEAN PATENT APPLICATION

(11) **EP 4 124 783 A1**
(43) Date of publication of application: **01.02.2023**
(21) Application number: 21187756.8
(22) Date of filing: 26.07.2021
(51) Int. Cl.: F16H 61/4096, F16H 61/4148, F16H 61/431

(54) **A HYDRAULIC TRANSMISSION**

(71) Applicant: Danfoss Scotland Ltd, Loanhead, Midlothian EH20 9TB (GB)
(72) Inventor: Stein, Uwe Bernhard Pascal, Loanhead Midlothian, EH20 9TB (GB); Rampen, William Hugh Salvin, Loanhead Midlothian, EH20 9TB (GB); Caldwell, Niall, Loanhead Midlothian, EH20 9TB (GB)
(74) Representative: Keil & Schaafhausen Patentanwälte PartGmbB

(57) **Abstract**

A hydraulic transmission (1) comprises a prime mover (2), a first hydraulic displacement machine (3), a speed/torque summing assembly (4), a second hydraulic displacement machine (5), and driven elements (6) is described, wherein the first hydraulic displacement machine (3) or the prime mover (2) is connected to a third input/output of the speed/torque summing assembly (4), the second hydraulic displacement machine (5) is connected to a second input/output of the speed/torque summing assembly (4) and the driven elements (6) are connected to a third input/output of the speed/torque summing assembly (4).

The possibilities of operation of such a hydraulic transmission should be increased.

To this end, the first hydraulic machine (3) is an electronically commutated machine controlled by a controller (51), and the second hydraulic machine (5) is a machine with fixed commutation.

## Description

The present invention relates to a hydraulic transmission comprising a prime mover having a prime mover shaft, a first hydraulic machine having a first machine shaft, a speed/torque summing assembly, a second hydraulic machine having a second machine shaft, and driven or driving elements, wherein the first machine shaft or the prime mover shaft is torque connected to a first input/output shaft of the speed/torque summing assembly, the second machine shaft is torque connected to a second input/output shaft of the speed/torque summing assembly, and the driven or driving element or elements are connected to a third input/output shaft of the speed/torque summing assembly.

The term "torque connected" means that a torque and/or a rotational movement can be transferred from one element to another element or that the elements are operatively connected. The torque connection can be realized by a direct connection, a shaft coupling, a gear box or the like. The driven or driving elements might for example be a road wheel of a vehicle, or a winch drum of a winch system. One skilled in the art will recognise these components may together define a hydro mechanical powersplit transmission, in the field of continuously variable transmissions. Being a powersplit transmission, there is a dual energy path somewhere between the prime mover and the driven or driving element or elements (a hydraulic, and a mechanical one).

Such a hydraulic transmission can be used, for example, for driving a vehicle, like a tractor or another agriculture machine or industrial machine. The speed/torque summing assembly is used to add the speed at two inputs, so that the added speed is provided at the output. Furthermore, the speed/torque summing assembly adds the two torques at two inputs and provides the added torques at the output.

In the present case the speed/torque summing assembly has three torque connected interfaces, wherein each interface can be used as a torque input or output. Thus, these interfaces are called input/output shafts.

It is a broad objective of the present invention to provide a viable and effective powersplit hydraulic transmission, in which there is a high level of controllability (e.g. the seamless gear changes, as discussed elsewhere).

This broad objective is attained and various problems solved using a hydraulic transmission as described in claim 1.

In other words, the hydraulic circuit is an open hydraulic circuit, in which hydraulic fluid can be sucked from a tank via the tank port and returned to the tank. The tank contains a volume of hydraulic fluid, which can vary, and will vary depending on the demands of the connected hydraulic circuit. One of the hydraulic displacement machines, for example the first hydraulic displacement machine, is operated as pump delivering hydraulic fluid to the second hydraulic displacement machine. The second hydraulic machine is connected to one of the input/output shafts of the speed/torque summing assembly. Another input/output shaft of the speed/torque summing assembly is connected to the first hydraulic machine or to the prime mover. It is also possible that the prime mover is connected to the first hydraulic machine and at the same time to the input/output shaft of the speed/torque summing assembly. In any case, the speeds and torques, respectively, at the two inputs are added and the driven elements are driven with the sum of the speeds and the sum of the torques.

According to the invention the first hydraulic machine is a digital displacement machine (abbreviated DD machine). A digital displacement machine is a hydraulic fluid working machine comprising a rotatable shaft and one or more working chambers (e.g. chambers defined by cylinders, within which pistons reciprocate in use) having a volume which varies cyclically with rotation of the rotatable shaft, each working chamber having a low-pressure valve which regulates the flow of hydraulic fluid between the working chamber and a low-pressure line and a high-pressure valve which regulates the flow of hydraulic fluid between the working chamber and a high-pressure line. The reciprocation of the pistons may be caused by direct interaction with an eccentric on the rotatable shaft, or with an eccentric on a second rotatable shaft, the second rotatable shaft being rotatably connected to the rotatable shaft. A plurality of digital displacement machines with linked rotatable shafts (e.g. common shafts) driven by the prime mover may function together as the hydraulic machine.
Typically, the hydraulic machine is operable as a pump, in a pump operating mode or is operable as a motor in a motor operating mode. It may be that some of the working chambers of the hydraulic machine may pump (and so some working chambers may output hydraulic fluid) while other working chambers of the hydraulic machine may motor (and so some working chambers may input hydraulic fluid).
The working chambers are each associated with Low Pressure Valves (LPVs) in the form of electronically actuated face-sealing poppet valves, which have an associated working chamber and are operable to selectively seal off a channel extending from the working chamber to a low-pressure hydraulic fluid line, which may connect one or several working chambers, or indeed all as is shown here, to the low-pressure hydraulic fluid line of the hydraulic fluid working machine. The LPVs are normally open solenoid actuated valves which open passively when the pressure within the working chamber is less than or equal to the pressure within the low-pressure hydraulic fluid line, i.e. during an intake stroke, to bring the working chamber into fluid communication with the low-pressure hydraulic fluid line but are selectively closable under the active control of the controller via LPV control lines to bring the working chamber out of fluid communication with the low-pressure hydraulic fluid line. The valves may alternatively be normally closed valves.
The working chambers are each further associated with a respective High-Pressure Valve (HPV) each in the form of a pressure actuated delivery valve. The HPVs open outwards from their respective working chambers and are each operable to seal off a respective channel extending from the working chamber to a high-pressure hydraulic fluid line, which may connect one or several working chambers, or indeed all, to the high-pressure hydraulic fluid line. The HPVs function as normally-closed pressure-opening check valves which open passively when the pressure within the working chamber exceeds the pressure within the high-pressure hydraulic fluid line. The HPVs also function as normally-closed solenoid actuated check valves which the controller may selectively hold open via HPV control lines once that HPV is opened by pressure within the associated working chamber. Typically, the HPV is not openable by the controller against pressure in the high-pressure hydraulic fluid line. The HPV may additionally be openable under the control of the controller when there is pressure in the high-pressure hydraulic fluid line but not in the working chamber, or may be partially openable.

In a pumping mode, the controller selects the net rate of displacement of hydraulic fluid from the working chamber to the high-pressure hydraulic fluid line by the hydraulic motor by actively closing one or more of the LPVs typically near the point of maximum volume in the associated working chamber's cycle, closing the path to the low-pressure hydraulic fluid line and thereby directing hydraulic fluid out through the associated HPV on the subsequent contraction stroke (but does not actively hold open the HPV). The controller selects the number and sequence of LPV closures and HPV openings to produce a flow or create a shaft torque or power to satisfy a selected net rate of displacement.

In a motoring mode of operation, the hydraulic machine controller selects the net rate of displacement of hydraulic fluid, displaced by the hydraulic machine, via the high-pressure hydraulic fluid line, actively closing one or more of the LPVs shortly before the point of minimum volume in the associated working chamber's cycle, closing the path to the low-pressure hydraulic fluid line which causes the hydraulic fluid in the working chamber to be compressed by the remainder of the contraction stroke. The associated HPV opens when the pressure across it equalises and a small amount of hydraulic fluid is directed out through the associated HPV, which is held open by the machine controller. The controller then actively holds open the associated HPV, typically until near the maximum volume in the associated working chamber's cycle, admitting hydraulic fluid from the high-pressure hydraulic fluid line to the working chamber and applying a torque to the rotatable shaft.

In this mode, as well as determining whether or not to close or hold open the LPVs on a cycle by cycle basis, the controller is operable to vary the precise phasing of the closure of the HPVs with respect to the varying working chamber volume and thereby to select the net rate of displacement of hydraulic fluid from the high-pressure to the low-pressure hydraulic fluid line or vice versa.

Individual working chambers are selectable by a valve control module, on each cycle of working chamber volume, to either displace a predetermined fixed volume of hydraulic fluid (an active cycle), or to undergo an inactive cycle (also referred to as an idle cycle) in which there is no net displacement of hydraulic fluid, where the active cycle may involve a full cylinder stroke displacement or a partial cylinder stroke of displacement, thereby enabling the net fluid throughput of the machine to be matched dynamically to the demand indicated by the demand signal. The controller and/or the valve control module may be operable to cause individual working chambers to undergo active cycles or inactive cycles by executing an algorithm (e.g. for each cycle of working chamber volume).
Thus, when the first hydraulic machine is a digital displacement machine, the volume of hydraulic fluid pumped or motored during each shaft revolution of the first hydraulic machine is controlled very precisely.

In an embodiment of the invention the second hydraulic machine is a fixed displacement machine.

In an embodiment of the invention the prime mover shaft is directly torque connected to the first hydraulic displacement machine. In other words, there is a common shaft of prime mover and first hydraulic machine or the shafts of prime mover and first hydraulic machine are connected by a coupling.

In an embodiment of the invention the prime mover shaft is torque connected to the first input/output shaft of the speed/torque summing assembly and the first hydraulic machine shaft is torque connected to the driven or driving elements.

In an embodiment of the invention the valve arrangement comprises either an H-bridge type hydraulic arrangement comprising four valves which are two pressure relief valves with parallel checks and two actuated blocking valves, or the valve arrangement comprises a 4-port directional changeover valve ('DCV'), where said 4-port valve or part of the H-bridge arrangement enable selective high pressure fluid connection of either side of the second hydraulic machine to the first hydraulic machine, said hydraulic circuit comprises a tank port, said tank port connected to a low pressure reservoir. The DCV is likely to be in the form of a spool valve. The two sides of the second hydraulic machine may be respectively called the 'A', and 'B' ports. Considering an 'H' as written, the second hydraulic machine is arranged in the horizontal beam of the H and the four valves are arranged in the four legs of the H. In a circuit diagram the orientation may be rotated from a normal 'H' as written. With such a bridge arrangement the flow of the hydraulic fluid can be directed in both opposite directions. The H-bridge valve arrangement can be used to influence the conditions of the hydraulic fluid, i.e. to control the flow and/or pressure of the hydraulic fluid in the hydraulic circuit, so that there is an additional possibility for influencing the operational behaviour of the second hydraulic displacement machine.

In a cross-port relief embodiment of the invention at least two of the valves are active valves which are controllable by means of a controller. The valves can be solenoid or piezo actuated. The electrical signal supplied to the solenoids are controlled by the controller. Another possibility is to use other auxiliary forces (i.e. piloted actuation, the pilot for example feeding from the other side of the H-bridge in the cross-port relief embodiment), which may be controlled by the controller. When two of the valves are controlled by a controller, this is sufficient to control the direction of the fluid through the H bridge arrangement. A simple method to stop the flow across the second hydraulic machine in the centre of the H-bridge, is to close the 4 valves, thus stopping rotation.

In a cross-port relief embodiment of the invention, two of the valves are each controlled by at least one hydraulic pressure in the hydraulic circuit. These are preferably the other two valves (i.e. other than the actively actuated valves). A pressure-controlled valve does not need additional auxiliary forces, beyond the force provided by (for example) the pilot actuation of the pilot line in the cross-port relief embodiment.

In a cross-port relief embodiment of the invention the valves controlled by a hydraulic pressure are connected to the tank port. These pressure-controlled valves are used to control the flow back to the tank port. Thus, this control of the flow of hydraulic fluid, is control of that taking place between the first hydraulic machine and the second hydraulic displacement machine.

In a cross-port relief embodiment of the invention each of the valves controlled by the hydraulic pressure is bridged by a bypass valve opening in a direction away from the tank port. The bypass valve can be, for example, a check valve. When hydraulic fluid is to be sucked from the tank, it is not necessary to open the pressure-controlled valve which would require additional means for controlling them. The bypass valve is a simple solution for this problem.

In an embodiment of the invention an accumulator is connected to the hydraulic circuit by means of an accumulator valve arrangement. The accumulator, in particular a hydraulic accumulator can be used to store energy in form of a pressure of the gas bladder in the gas accumulator. Alternatives to a gas accumulator include a spring accumulator, or other such hydraulic energy storage means. Flow from the second hydraulic machine charges the accumulator, in a pumping mode, when the vehicle is losing gravitational potential energy or losing kinetic energy through braking, and/or when the prime mover drives the first hydraulic machine, in a pumping mode. The term "accumulator" can be replaced by "energy storage means".

In an embodiment of the invention the first hydraulic machine comprises at least two independently controlled high pressure hydraulic ports, wherein one of the ports is fluidly connected to the accumulator via the accumulator valve arrangement and another one of the ports is fluidly connected directly to the hydraulic circuit. In this case, at least part of the first hydraulic machine can be used as a pump which, when driven by the prime mover, pumps hydraulic fluid to the hydraulic circuit. The pressure stored in the accumulator can then be used to drive another part, as a motor, of the first hydraulic machine to which it is connected. This has the advantage that the energy stored in the charged accumulator can be used as an auxiliary energy source if the pressure in the accumulator is above the required pressure in the hydraulic circuit required to transfer power in the hydraulic circuit.

In an embodiment of the invention the prime mover shaft is torque connected to the first hydraulic displacement machine. In this case the hydraulic transmission is "input coupled". A shaft of the first hydraulic machine can be coupled to the prime mover and to an input/output shaft of the speed/torque summing assembly.

In an alternative embodiment of the invention the prime mover shaft is torque connected to the first input/output shaft of the speed/torque summing assembly and the first hydraulic machine shaft is connected to the driven or driving elements. In this case the hydraulic transmission is said to be "output coupled".

The controller can achieve control of the second hydraulic machine by in fact controlling two other things: it controls the logic of the H-bridge (by controlling at least one of the H-bridge valves) in order to ensure the flow is going the right way, and it controls the magnitude of the demand signal to the first hydraulic machine thus determining the pressure/flow in the high pressure manifold and related hydraulic circuit, to ensure the second hydraulic machine (connected to that same high pressure manifold and related hydraulic circuit) is also going at the correct speed. By doing these two things, the second hydraulic machine will then rotate as commanded - without itself being directly controlled. If the second hydraulic machine is a variable displacement machine, there is an additional direct means of displacement control, and the machine would be controlled by a controller.

In a first embodiment of the invention in which the hydraulic path is in an overrun state, in which the second hydraulic machine is operated as a pump, the controller controls the first hydraulic machine to operate as a motor driving the speed/torque summing assembly.
In a second embodiment of the invention in which the hydraulic path is in an driving state, in which the second hydraulic machine is operated as a motor, the controller controls the first hydraulic machine to operate as a pump being driven by the prime mover.

Where the vehicle is in an acceleration state, the hydraulic path will alternate between driving and overrun conditions. Similarly, during a deceleration state, the hydraulic path will again alternative between driving and overrun conditions.
The exact control of first hydraulic machine, the H-bridge configuration, and (potential variable displacement of) the second machine, across a full speed range is not described here, however each needs be controlled, and will need to be controlled both at zero crossing (of the second hydraulic machine RPM), and at gear changes.

In an embodiment of the invention the hydraulic transmission, which is part of a vehicle, the transmission comprises an accumulator connected to the hydraulic circuit. Pressure in the circuit is determined by a state of charge of said accumulator. In this embodiment, the braking force is not simply a reflection of the state of charge of the accumulator, which would be wholly unacceptable and impractical, but is also influenced by the correcting torque of the first machine. Flow through the second machine is in part determined by a shaft speed of the second machine. Power of the second machine is a product of the pressure multiplied by flow (through the second machine), and where the mechanical linkage providing torque transmission means between the first and second machines allows the first machine to transfer(via the mechanical linkage) a correct torque (and thus the correct power) at the driving or driven elements. The mechanical linkage which transmits torque can be embodied by a variety of forms, including an intermediate gearbox, an epicyclic, or other similar means. Torque correction involves compensation by injection or extraction of torque arising from or being absorbed by the first machine to provide a correcting torque, said correcting torque being generated by controlling the flow, and flow direction, of the first machine.

In an embodiment of the invention the first hydraulic machine and the second hydraulic machine are fluidly connected by a hydraulic circuit fluidly connected to a low pressure reservoir via a port.

In an embodiment of the invention a gear box is arranged in a primary energy transmission path between the prime mover and the driven or driving elements.

In an embodiment of the invention the gear box is arranged in a primary energy transmission path between the speed/torque summing assembly and the driven or driving elements.

In an embodiment of the invention the gear box is arranged in a primary energy transmission path between the prime mover and the speed/torque summing assembly (4).

In an embodiment of the invention the hydraulic transmission comprises a gear box having at least two gears, wherein a rotational speed of the second hydraulic machine is controlled by a controller in a range from a negative to a positive speed and a transmission ratio of the at least two gears is chosen so that the second hydraulic machine changes rotational speed from negative to positive either within, or outside a predetermined speed range of the vehicle. The gear box can be used to keep the rotational speeds of the rotating elements, prime mover, first hydraulic displacement machine, second hydraulic machine and speed/torque summing assembly in a reasonable and acceptable range. In many cases the vehicle has at least one preferred predetermined speed range, for example urban speed or highway speed, by which we mean a range in which the vehicle may likely spend most of its operational life. When the gear box has two gears, it has gear two ratios. Gear ratios can be selected at the design stage in light of one or more of the preferred speeds of the vehicle. For example, at launch (i.e. acceleration of the vehicle from zero speed) the prime mover runs at idle speed. The second hydraulic displacement machine, rotates in the negative direction driven by the speed/torque summing assembly. The first hydraulic machine absorbs all of the generated flow such that no significant pressure is generated by the second hydraulic displacement machine. As the vehicle accelerates the first hydraulic machine reduces its flow rate to slow the rotation speed of the second hydraulic displacement machine, thereby increasing the output shaft speed. Half way between launch and first gear change, the second hydraulic machine slows from a negative to zero speed and then, as vehicle acceleration continues, begins rotating in the positive direction. Now the first hydraulic machine is operating as a pump sending power in a positive direction to reinforce the mechanical drive from the prime mover. When the second hydraulic machine speed reaches maximum, ideally outside the predetermined speed ranges, the system will need to change gear to continue vehicle acceleration. In this period of acceleration, initially the second hydraulic machine rotates at maximum reverse speed in the new gear.

In an embodiment of the invention, the designed gearbox ratios are chosen such that normal gear shifting (preferably carried out automatically) occurs outside the predetermined speed range of the vehicle. Thus, if most operation of the vehicle occurs within these predetermined speed ranges, thus no gear shift is necessary for most of the time.

In an embodiment of the invention the controller adjusts the displacement of first hydraulic machine so that the second hydraulic machine is always rotating, for example at least at a very slow speed. For example, a mode for the second hydraulic displacement or first hydraulic displacement that allows some level of slip in the hydraulic path so that the second hydraulic machine keeps moving during the locked-up phase to avoid wear. 'Locked-up' is simply a reference to a hydraulic machine state where the demand is zero and thus the rotation speed should be zero. The mode of the invention would allow minimal rotation of the second hydraulic displacement machine. Allowing it to rotate very slowly will cause only a very small drop in overall efficiency but may significantly increase the longevity of the hydraulic machine.

In an embodiment of the invention the controller coordinates vehicle transition between forward and reverse with the direction reversal of the second hydraulic displacement machine. Vehicle direction transition between forwards and reverse is coordinated with rotation direction reversal of the second hydraulic machine (thus zero vehicle speed is coordinated with zero rotational speed of the second hydraulic displacement machine). During this direction transition, the gearbox remains in first mechanical gear. This represents a 'safer default' of the second hydraulic displacement machine, to zero vehicle speed. I.e. failure of second hydraulic displacement machine, to zero rotational speed, also leads to 'safe' vehicle speed of zero.

In an embodiment of the invention the controller controls braking of the vehicle by modulating a flow of the first hydraulic displacement machine. When, for example, pressurised flow arising from overrun state is fed to an 'energy store' (e.g. the accumulator which is switched in with a three port valve), and said energy flow (power) could be modulated by using the first hydraulic machine to variably motor the excess high pressure fluid coming from the second hydraulic displacement machine, via the high pressure manifold, and convert it back into shaft power, which is mechanically recirculated by the connecting shafts and gearing to help drive the second hydraulic displacement machine. In this way the braking effort of the vehicle can be modulated by the commanded displacement of the first hydraulic displacement machine. I.e. the higher the displacement of the first hydraulic displacement machine, the lower the retarding torque (with a consequent reduction of power flow to the accumulator).

In an embodiment of the invention the controller changes the valve arrangement flow-routing as the vehicle drive torque changes polarity. Broadly, such change in polarity may be the change in drive torque from positive to negative, or vice versa. When, for example, the vehicle goes over the top of a hill in the forward direction, initially a valve which is termed a "forward valve" is initially open and the first hydraulic machine pumps at a rate that provides the desired vehicle speed. The road starts to level out and the pressure in the high pressure manifold drops in proportion to the torque requirement. Then the vehicle starts moving downhill and the pressure required is zero, but (potentially, depending on the gear state, and thus the second machine state) at quite a large flow due to the requirement of the second hydraulic machine at the higher end of its rotational speed range. Now the vehicle tries to exceed the demand speed and so it is necessary to reconfigure the system to create a braking torque. The flow through the second hydraulic machine is still going in the same direction, but the polarity of the pressures on the ports on the second hydraulic machine must reverse. First another valve which is termed "reverse valve" is opened as well. Then, briefly, the second hydraulic machine is effectively freewheeling with the entire system (both 'sides' or 'ports' of the second machine) at low pressure. Then the forward valve is closed and the second hydraulic machine starts to pull its fluid from tank (could be a boosted tank) through the check valve on the forwards side of the motor. The pressure then rises to the level of the accumulator, which can now be switched in. At the same time the first hydraulic machine starts to motor at a rate that sends a positive torque back to the speed/torque summing assembly to create an overall power flow (which is the sum of the power flow in the mechanical linkage and the hydraulic linkage) that matches the braking torque to the operator demand.

The invention relates also to a method of operating the hydraulic transmission according to any preceding claim, wherein the prime mover is coupled to a first input/output shaft of the speed/torque summing assembly being able to add or subtract torque, the first hydraulic machine also coupled to said first input/output shaft, or a second or third of the input/output shafts, of the speed/torque summing assembly, said first hydraulic machine being operated to convert shaft power into fluid power or to convert fluid power into shaft power, the second hydraulic machine coupled to one of the remaining shafts of the speed/torque summing assembly which shaft is not coupled to the first hydraulic machine, said second hydraulic machine being operated to convert fluid power into shaft power or to convert shaft power into fluid power, the output shaft (i.e. that which is coupled to the driven or driving elements) being coupled to the remaining input/output shaft of the speed/torque summing assembly not directly coupled to the first or second hydraulic machines,
said transmission being selectively operated in at least one of the following modes;
a first mode where the second hydraulic machine is held static by, where the first hydraulic machine is operated in an idle condition, resulting in the natural gear ratio of the speed/torque summing assembly being transferred through,
a second mode where the second hydraulic machine is operated as a pump to convert shaft power into fluid power, said fluid power being applied to the first hydraulic machine adding power to said first input/output shaft of the speed/torque summary assembly, thereby reducing the speed of the output shaft (i.e. that which is coupled to the driven or driving elements) but increasing its torque,
a third mode where the first hydraulic machine being operated as a pump to convert shaft power to fluid power, the second hydraulic machine is operated as a motor to convert said fluid power into shaft power rotating in the same direction as said first input/output shaft of the speed/torque summing assembly, thereby increasing the rotation speed of the output shaft (i.e. that which is coupled to the driven or driving elements),
a fourth mode where the first hydraulic machine is operated as a pump to convert shaft power into fluid power the second hydraulic machine being operated as a motor to convert said fluid power into shaft power rotating in the opposite direction to said first input/output shaft of the speed/torque summing assembly thereby reversing the direction of rotation of the output shaft (i.e. that shaft which is coupled to the driven or driving elements),
a fifth mode where both the first and second hydraulic machines are operated in an idle mode, thereby allowing the speed and direction of the output shaft(i.e. that which is coupled to the driven or driving elements), to be independent in terms of speed and direction relative to said first input/output shaft of the speed/torque summing assembly.

The first hydraulic machine can be operated as pump or as motor. The modes mentioned above are not "static" modes, i.e. the transmission is can continuously move from mode to mode in a completely dynamic way. Each of the modes can be considered to represent a snapshot in time. The first mode is a "straight through" mode in the sense of the speed/torque summing assembly providing the ratio (it's natural ratio), between its input and output shaft. In the idle condition neither the high pressure valves nor the low pressure valves of the first hydraulic machine are commanded, and there is free interchange of fluid and torque. The second mode is a kind of "low gear" mode. The third mode can be considered as an overdrive mode. The fourth mode is a reverse mode. The fifth mode is a neutral mode, where speed and rotation are independent, like neutral gear selected in a car.

Not all modes are necessarily available in all embodiments. In this method, the term "coupled" means "directly connected".

In embodiments with gearboxes, the invention provides smooth gear changes, as enabled by high bandwidth of a digital displacement machine. It provides the ability to modulate torque to near zero levels, allowing us to momentarily take torque off the mechanical driveline to facilitate a smooth shifting of mechanical gears ('gear change'), then re-engaging with the appropriate hydrostatic drive shaft speed to continue vehicle acceleration. Efficient transmission of power from prime mover to pump is enabled by:
the ability to 'through-shaft' a DD pump. Specifically, the through-shaft permits the mechanical power to come directly from the prime mover through the shaft of the DD machine (e.g. locating the DD machine on an engine shaft of an internal combustion machine (IC)) which eliminates the need for transfer gearing, and is made viable by the low parasitic loss of a DD machine as compared to a conventional hydraulic machine.

In one embodiment, the final drive can consist of a conventional fixed displacement hydraulic machine. This is inexpensive, compact, and has a wide speed range.

Modulation of torque and speed under all conditions, including overrun, is provided and uniquely enabled by using a DD hydraulic machine in the 'primary drive' (defined below). The DD machine, as is known, may be provided with one or more services (HP input/output port).

Advantages of a combination of a digital machine with H-bridge layout and a speed/torque summing assembly are:
It is controllably regenerative. It uses a conventional off-the-shelf fixed (or variable) motor in the final drive, which is relatively inexpensive, compact, and has a large speed range. It is sufficiently minimal (i.e. few components, relatively speaking) to be considered an economic prospect.

In reference to the drawings, one skilled in the art will recognise that details and features are missing which would be obvious to include. For example, in respect of the second hydraulic machine, in order to prevent cavitation damage, conventional motors require a minimum back-pressure on both lines at all times, and as recognised by one skilled in the art, this is typically provided by an external charge pump, which can connect to either side, whichever one is at lower pressure. However, it is not shown in the images.

Preferred embodiments of the invention will now be described in more detail with reference to the drawings, in which:
- Fig. 1: shows schematically a first embodiment of a hydraulic transmission,
- Fig. 2: shows schematically a second embodiment of a hydraulic transmission,
- Fig. 3: shows schematically a third embodiment of a hydraulic transmission,
- Fig. 4: shows schematically a fourth embodiment of a hydraulic transmission,
- Fig. 5: shows schematically the hydraulic transmission in the four quadrants of operation,
- Fig. 6: is a diagram showing schematically relations between vehicle speed, gears, and rotational speed of the second hydraulic displacement machine, and
- Fig. 7: is a schematic illustration of a digital displacement machine.

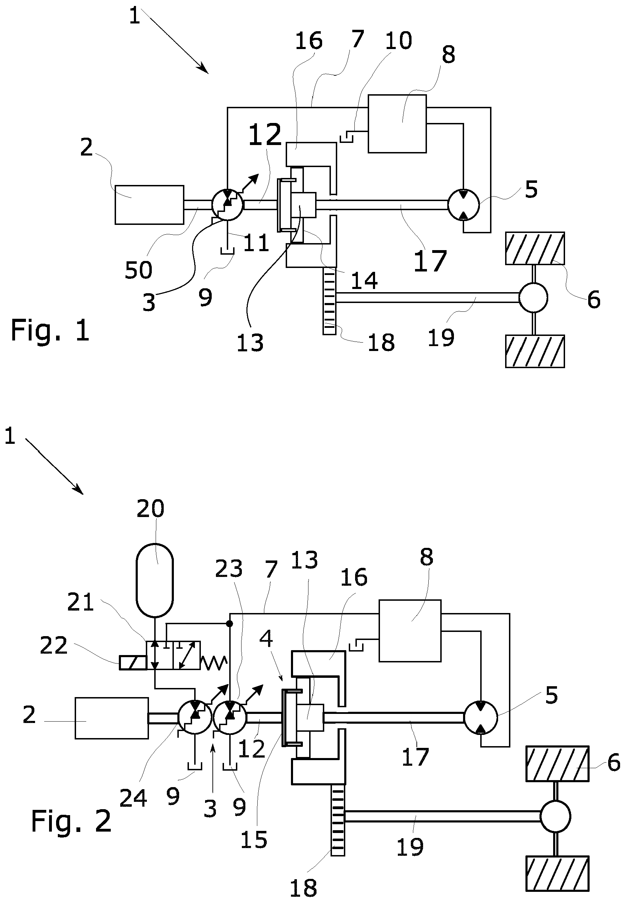

Fig. 1 shows schematically a hydraulic transmission 1 comprising a prime mover 2, a first hydraulic machine 3, a speed/torque summing assembly 4, a second hydraulic machine 5 and driven elements 6. The driven elements 6 can be, for example, in form of driven wheels of a vehicle. The vehicle can be a tractor, any other agriculture working machine or any other working machine, like a shovel loader. The driven elements 6 are usually driven, when the vehicle is propelled under the action of the prime mover. However, when the vehicle runs downhill or has to be braked, the driven elements 6 drive parts of the transmission. In order to facilitate the following explanation, the elements 6 are termed "driven elements" although they are "driven or driving elements", and the same applies to a 'driving' shaft 19 connected to the driven elements 6.

The first hydraulic machine 3 and the second hydraulic machine 5 are connected by means of a hydraulic circuit 7, in particular a high pressure manifold. A valve arrangement 8 is arranged in the hydraulic circuit 7. The hydraulic circuit 7 is connected to a tank 9 by means of a tank port 10 at the valve arrangement 8 and by means of a tank port 11 of the first hydraulic machine 3.

The first hydraulic machine 3 comprises a main shaft 12 in the form of a crank or cam shaft. This shaft (or perhaps pair of cojoined shafts) extends through the body of the respective hydraulic machine, a so called 'through-shafted' machine, with one end typically in torque connection with the prime mover shaft 50, and the other end in torque connection with and input/output shaft of the speed/torque summing assembly 4.

The first hydraulic machine 3 is in form of a digital displacement machine as it is described in the introductory part above.

In the present embodiment the second hydraulic machine 5 is in form of a fixed displacement machine.

In the present embodiment the speed/torque summing assembly 4 is in the form of an epicyclic or planetary gear set. The speed/torque summing assembly 4 comprises a sun gear 13, planet gears 14 which are arranged on a planet carrier 15 and a ring gear 16. The sun gear 13 is in meshing engagement with the planet gears 14. The planet gears 14 are in turn in meshing engagement with the ring gear 16.

In this case the main shaft 12 of the first hydraulic machine 3 is torque connected to the planet carrier 15. The second hydraulic machine 5 comprises a main shaft 17 which is torque connected to the sun gear 13 and the ring gear 16 is torque connected with the driven elements 6 via a gear 18 and the driving shaft 19.

In this case, in a normal propulsion mode of the vehicle, the planet carrier 15 and the sun gear 13 form an input of the speed/torque summing assembly 4 and the ring gear 16 forms an output of the speed/torque summing assembly 4. The sun gear 13 forms an input and the ring gear 16 forms an output only as long as the energy flow is from the prime mover to the driven elements 6.

One skilled in the art will recognise that the terms 'input' and 'output' are as transient as the energy flows that are permitted, where for example a regeneration mode will objectively see an 'input' component of the speed/torque summing assembly become an 'output.

Other connections are possible, as can be foreseen by one skilled in the art, for example instead connecting the first hydraulic machine 3 to the sun gear 13 and the second hydraulic machine 5 to the planet carrier.

In a way not shown, the prime mover 2 can be torque connected to the first hydraulic machine 3 via a clutch, so that a torque transmission between the prime mover 2 and the first hydraulic machine 3 can be interrupted. This clutch can be a one-way clutch allowing a torque transmission in one direction only.

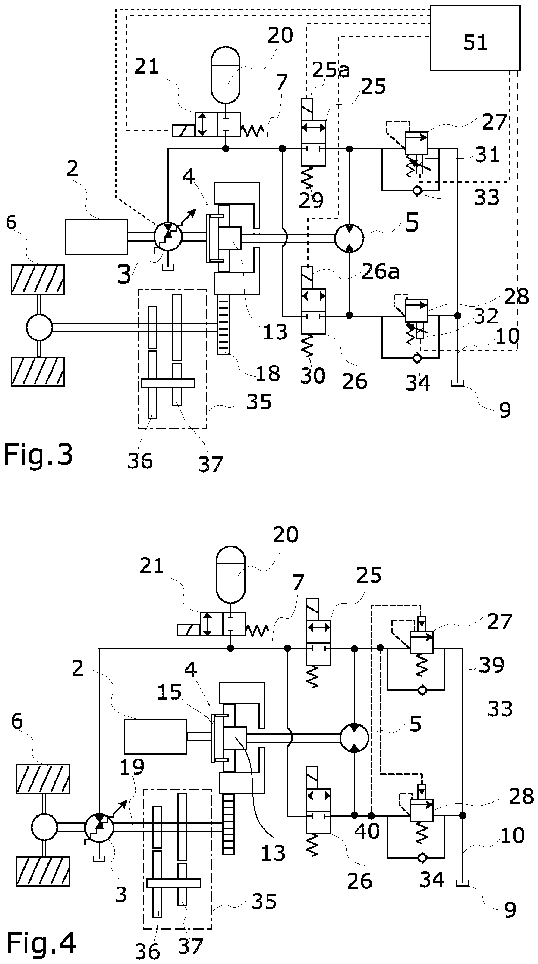

The valve arrangement 8 (comprising the fluid conduits, and key operative valves of an H-bridge arrangement) can be used to adjust the direction of the flow of the hydraulic fluid through the second hydraulic machine 5. An example of such a valve arrangement 8 is shown in Figs. 3 to 5.

Fig. 2 shows a second embodiment of the hydraulic transmission 1. The same and similar elements are denoted with the same reference numerals in all Figures.

The hydraulic circuit 7 is connected to an accumulator 20 by means of an accumulator valve arrangement 21. The accumulator valve arrangement 21 can be controlled by an actuator 22, for example in the form of a solenoid actuator. Instead of an accumulator any other hydraulic energy storage means can be used.

Furthermore, the first hydraulic machine 3 comprises two sections 23, 24. The first section 23 is torque connected to the planet carrier 15 by means of the main shaft 12. The second section 24 is also torque connected to the main shaft 12. Said first hydraulic machine 3 is fluidly connected to the accumulator 20 by means of the accumulator valve arrangement 21.

In order to simplify the explanation and the drawing, only a single main shaft 12 and only a single prime mover shaft 50 are shown. It should, however, be noted that the prime mover 2, the first hydraulic machine 3, and the speed/torque summing assembly 4 each have a shaft as separate components and at least two of these shafts are connected by means of a shaft coupling or the like.

The accumulator valve arrangement 21 can be switched to two positions, where the valve logic of each of the two positions is shown in Fig 2, positions of first and second, going from left to right. In the first position (numbers from left to right), the accumulator 20 is connected to the second section 24 of the first hydraulic machine 3. In the same position, as shown in the valve symbol, the hydraulic circuit 7 is isolated from the accumulator. In a second position (numbers from left to right) the accumulator valve arrangement 21 connects the second section 24 of the first hydraulic machine 3 to the hydraulic circuit 7, whilst isolating the accumulator 20.

When the accumulator 20 is loaded with hydraulic fluid under an elevated pressure and the accumulator valve arrangement 21 is in the second position shown in Fig. 2, the pressure in the hydraulic accumulator 20 is discharged and drives the second section 24 of the first hydraulic machine 3. The second section 24 is in this case operated as a motor. The torque produced by this second section 24 is added to the torque produced by the prime mover 2. Thus, the energy stored in the hydraulic accumulator 20 can be utilized even if the pressure in the hydraulic accumulator 20 falls below the pressure in the hydraulic circuit 7. This latter pressure is mainly determined by the power of the first section 23 of the first hydraulic machine 3.

In the second position of the accumulator valve arrangement 21 the second section 24 of the first hydraulic machine 3 is directly connected to the hydraulic circuit 7. In this case, the first section 23 of the first hydraulic machine 3 can be selectively operated as a pump delivering hydraulic fluid under elevated pressure to the hydraulic circuit 7, or can selectively be operated as a motor receiving fluid under elevated pressure from the hydraulic circuit 7

Fig. 3 shows a third embodiment of the hydraulic transmission 1 in which the same elements are denoted with the same reference numerals as in Fig. 1 and 2, and shows in more detail the valve arrangement 8.

The valve arrangement 8 and corresponding fluid conduits are in the form of an H-bridge. The second hydraulic machine 5 is arranged in the horizontal beam of the "H", while four valves 25-28 are arranged in the four legs of the H, wherein the H is rotated by 90°. In other words, the valves 25-28 are arranged in a bridge arrangement. The bridge arrangement comprises a first fluid conduit between the tank port 10 and the first hydraulic machine 3. The second hydraulic machine 5 is arranged in the second fluid conduit.

Two of the valves, namely the valves 25, 26 which are arranged between the first hydraulic machine 3 and the second hydraulic machine 5, are valves which are controlled by means of a controller (not shown). To this end each of the valves 25, 26 is provided with a solenoid actuator 25a, 26a and a return spring 29, 30. However, other ways of actuating the controlled valves 25, 26 are possible.

The remaining two valves 27, 28 which are arranged between the second hydraulic machine 5 and the tank port 10 are valves which are controlled by a hydraulic pressure in the hydraulic circuit. This is symbolized by a hydraulic actuator 31, 32 at each of the pressure-controlled valves 27, 28. Each of the pressure-controlled valves 27, 28 is bridged by means of a bypass valve 33, 34. The bypass valves 33,34 are in form of check valves which open in a direction away from the tank port 10.

The valve arrangement 8, the first hydraulic machine 3 and the accumulator valve arrangement 21 are controlled by at least one controller 51. A controller 51 is provided in the other embodiments as well.

Furthermore, the hydraulic transmission 1 comprises a gear box 35 having two or more speeds 36, 37. The gear box 35 is arranged between the gear 18, i.e. the output of the speed/torque summing assembly 4, and the driven elements 6. The gearbox may have multiple speed ratios, or single fixed ratio.

Instead of using a H-bridge arrangement for the valve arrangement 8, it is possible to use a Directional Control Valve (DCV), in particular in the form of a spool valve.

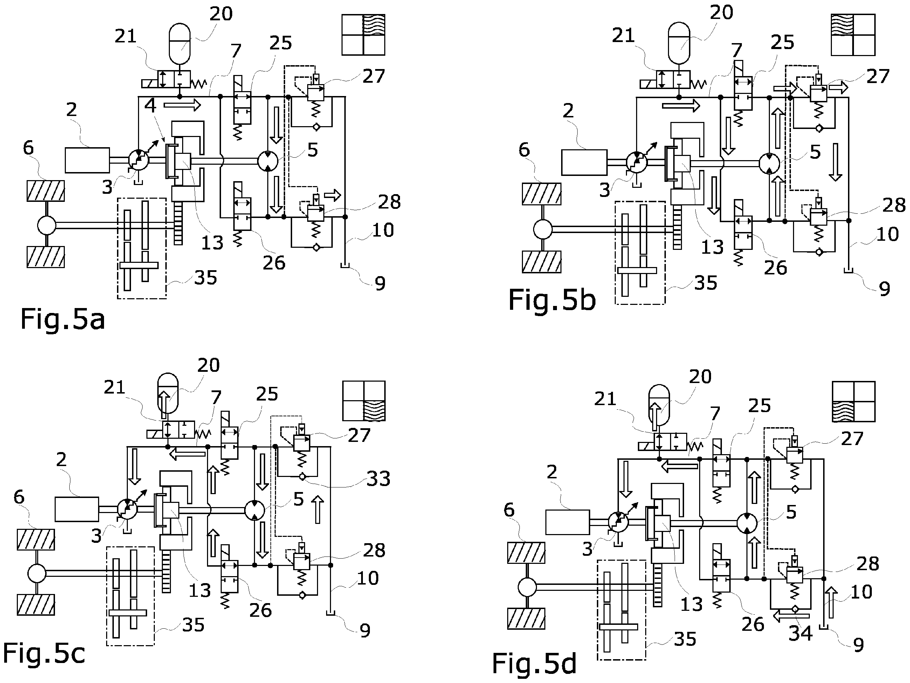

The operation of the transmission 1 shown in Fig. 3 will be explained in more detail with reference to Fig. 5.

Fig. 4 shows a fourth embodiment of a hydraulic transmission 1 in which same and similar elements are denoted with the same reference numerals. This configuration might for example be most suited to a hydraulic hybrid forklift truck, providing fluid power to both the motor propelling the vehicle, but also to a hydraulic load or loads 47 (e.g. lift, tilt, sideshift, steering). Although the first machine is shown as separate sections 3a & 3b, they may also be integral within the same body where 3a is a first service and 3b is a second service of a single first machine. Each service may be a pump, or a pump motor depending on the desired regeneration and transforming capabilities. As illustrated, 3a can regenerate the HP accumulator 20 energy, and 3b can only pump (to 3a, to load 37, or to the H-bridge). The low pressure side of the fixed motor is connected to a low pressure accumulator 48.

The embodiments shown in Fig. 1 to 3 are "input coupled", because the first hydraulic machine 3 is coupled to the first input/output shaft (i.e. predominantly an input) of the speed/torque summing assembly 4, in contrast to other "output coupled" embodiments. In this case, the prime mover 2 is again directly torque connected to the planet carrier 15 of the speed/torque summing assembly 4, but this time the first hydraulic machine 3 is directly torque connected to the driving shaft 19 downstream the gear box 35.

In Fig. 3, valve 27 is opened by a pressure in the fluid conduit between valve 25 and valve 27 provided that this overcomes the spring force of spring 39. In the same way pressure-controlled valve 28 is opened by a pressure in the fluid conduit between valve 26 and valve 28 provided that this overcomes the spring force of spring 40.

Fig. 5 shows the operation of the hydraulic transmission in four quadrants, where the H-bridge assembly is in a cross-ported configuration. These four quadrants are symbolized by a hatched area of the square in the right upper corner, understood by one skilled in the art to symbolize positive and negative torques (vertical axis) and speeds (horizontal axis).

Fig. 5a shows an operation in which a vehicle is driven forward with positive torque. In other words, the prime mover 2 is used to drive the driven elements 6 in the form of wheels.

Fig. 5b shows an operation in the second quadrant in which the prime mover 2 drives the vehicle in reverse direction.

Fig. 5c shows the situation when the vehicle moves forward, however, is not driven by the prime mover 2 but drives the prime mover 2. Such a situation can occur when the vehicle runs downhill.

Fig. 5d shows the same situation, however, the vehicle runs in reverse direction downhill.

Concerning the fluid power energy path, when the vehicle is commanded to drive forward, and is driven at least in part with positive torque from the second hydraulic machine 5, the accumulator valve arrangement 21 may be closed, i.e., it interrupts the connection between the hydraulic circuit 7 and the accumulator 20. Valve 25 is open. Valve 26 is closed. The flow of hydraulic fluid is symbolized by hatched arrows. As shown in Fig. 5a, the hydraulic fluid which is pumped by the first hydraulic machine 3 and flows from the first hydraulic machine 3 through valve 25 to the second hydraulic machine 5 and drives it as a motor. The second hydraulic machine 5 comprises two ports which are commonly referred to as "A" and "B". Thus, the hydraulic fluid is supplied to one of the ports, e. g. port "A". The flow outputted from the second hydraulic machine 5 (from port "B") flows to valve 28 which under normal circumstances is held open, via the cross-port flow, by the positive pressure on the input side to motor 5, so that valve 28 releases the fluid to tank 9 via the tank port 10. It is also possible during forward drive of the vehicle, driven at least in part with positive torque from the second hydraulic displacement machine, for the accumulator valve arrangement 21 to be open. This is only possible if the accumulator pressure is sufficiently high.

Concerning the shaft power energy path, at the same time the prime mover 2 drives via the through-shafted first hydraulic machine 3, it also drives a first input/output shaft of the speed/torque summing assembly 4. The second hydraulic machine 5 drives a second input/output shaft of the speed/torque summing assembly 4 so that the third input/output shaft of the speed/torque summing assembly 4 provides a drive firstly with a speed which is a proportional summation of the rotational speeds of the two hydraulic displacement machines 3, 5, and secondly with a torque which is a proportional summation of the torques of the two hydraulic displacement machines 3, 5. In respect of the speed/torque summing assembly 4, and the three input/output shafts, the first may be the planet carrier shaft, the second the sun gear shaft, and the third the ring gear shaft.

A similar situation arises when the vehicle is commanded to drive in reverse, and is driven at least in part with negative torque from the second hydraulic machine 5. In this case, as shown in Fig. 5b, the hydraulic circuit 7 is isolated from the accumulator 20. Valve 25 is closed and valve 26 is open, so that the fluid which is pumped by the first hydraulic machine 3 arrives at the second hydraulic machine 5 from the other side, in this case port "B". Fluid outputted by the second hydraulic machine 5 (port "A") reaches pressure control valve 27 and opens it, which under normal circumstances is held open, via the cross-port flow, by the positive pressure on the input side to motor 5, so that the hydraulic fluid can be released to tank via tank port 10.

When the vehicle overruns the prime mover 2, for example when the vehicle runs downhill or is commanded to reduce speed, the second hydraulic machine 5 may be as shown in Fig. 5c operated as pump. In this case the connection between the hydraulic circuit 7 and the hydraulic accumulator 20 is opened by the accumulator valve arrangement 21. Valve 25 is still closed and valve 26 is open. When the second hydraulic machine 5 is operated as a pump, it produces high pressure on one port (port "B"), and on the other side (port "A") produces a low pressure below atmospheric pressure at the tank port 10, so that hydraulic fluid is sucked from tank 9 and arrives at the second hydraulic machine 5 via the bypass valve 33 bridging the pressure-controlled valve 27. The fluid is then pumped to the hydraulic circuit 7 via the open valve 26. When the pressure increases as a result of the flow, at least part of this flow is directed into the hydraulic accumulator 20, so that the first hydraulic machine 3 is not absorbing the full flow back from the second hydraulic machine 5. In this way it is possible to keep the rotational speed of the first hydraulic machine 3, and of the prime mover 2 coupled to the first hydraulic machine 3 in an acceptable range. By controlling first hydraulic machine 3 this controls how much flow it absorbs, relative to how much goes to the accumulator 20, thus making it possible to control how much power is going to first hydraulic machine 3, and how much energy is stored in the accumulator 20.

If the second hydraulic machine 5 generates too much flow, a result of its input shaft rotating at high speed, and previous vehicle retardation events have caused the accumulator 20 to be full, some flow is sent to drive the first hydraulic machine 3 acting as a motor to drive the prime mover 2, allowing it to be de-fuelled. Alternatively, or in addition, it is also possible to allow some of the excess flow to pass through the H-bridge, across an over-centre valve(shown as 27 & 28 in Fig. 3, 4), or across a pressure relief valve (shown as 27 & 28 in Figures 5) to tank.

When the same situation occurs, however, with opposite direction, i.e., the vehicle is commanded to travel in the reverse direction, as shown in Fig. 5d, valve 25 is open and valve 26 is closed, so that the second hydraulic machine 5 sucks hydraulic fluid from the tank 9 via the tank port 10 and the second bypass valve 34 bridging the pressure-controlled valve 28. This flow reaches the hydraulic circuit 7 via the valve 25. Since the accumulator valve arrangement 21 is open, at least part of a fluid flow and pressure can be absorbed by the accumulator 20.

Compatible with the energy flow situations shown in Figs. 5c & 5d, the accumulator valve arrangement 21 can be opened such that fluid can communicate between the main (HP) spine of circuit 7 and the accumulator. Depending on the pressure and flow in that spine, and the condition of first hydraulic machine 3, it may also communicate fluid with that machine.

In this case, a sensor (possibly part of the control system) should be provided to detect the pressure in the hydraulic accumulator 20 to avoid overfilling.

The accumulator valve arrangement 21 can be connected to the same controller as the valve 25, 26, or to a separate controller.

Possible modes of operation of the hydraulic transmission 1 can be described as follows:
In a first mode, the first hydraulic machine 3 converts torque (power) from the prime mover 2 via the prime mover shaft 50 into fluid power, said fluid power is applied to the second hydraulic machine 5 causing rotational movement of the second input shaft of the speed/torque summing assembly 4, thus causing an increase of rotational speed of the driving shaft 19.

In a second mode, the second hydraulic machine 5 extracts torque (power) from the second input shaft of the speed/torque summing assembly 4, converting in the second machine said torque into fluid power, and converting in the first machine said fluid power into torque in order to drive rotation of the main shaft 12 while either maintaining (e.g. going down a hill) or reducing the rotational speed of the driving shaft 19.

There are two embodiments of the H-bridge arrangement, one relying on what is referred to by a person skilled in the art as a form of cross-port relief shown in Fig. 5, the other relying on actuated valves shown in Figs. 3 & 4.

By cross-port relief, one skilled in the art will understand that the valves of the H-bridge arrangement are fed with pilot lines from an opposite side of the H-bridge.

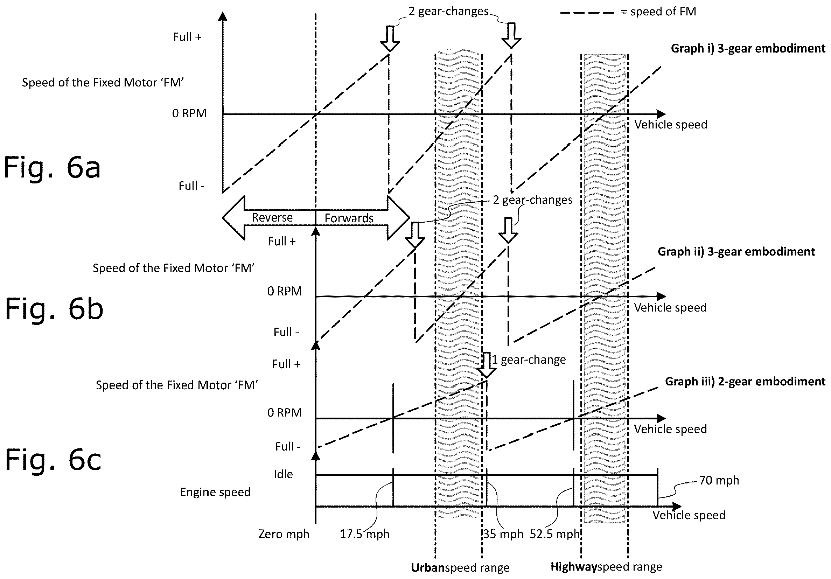

Fig. 6 shows three embodiments of the control of the second hydraulic machine 5 which in this example is a motor having a fixed displacement, and is thus abbreviated with "FM".

The horizontal axis (x-axis) shows the speed of a vehicle driven by the hydraulic transmission 1. The rotational speed of the second hydraulic machine is shown on the y-axis (vertical axis) shown in the graphs with dashed lines. This rotational speed can be positive, for example clockwise, or negative, for example counter-clockwise. Fig 6 shows furthermore two preferred speed ranges of the vehicle, i.e., urban speeds and highway speeds.

Having typical vehicle operating speeds ('urban', and 'highway') is primarily the domain of on-road vehicles which will run at various legislated speeds, although it is foreseeable that off-road vehicles are also subject to typical vehicle operating speeds (such as when working and travelling). Two common speed ranges are shown, although other common speed ranges might be anticipated.

Each gear shift leads to a rotation direction reversal of the second hydraulic machine 5 (between max forward and max reverse speed).

In all cases the rotational speed of the prime mover 2 is constant. One skilled in the art will understand that this is partially to aid explanation of the concept, but may also allow the engine to be run at an optimum speed, and will understand that the speed could be allowed to vary. Optimum speed could be in terms of fuel economy. Where the rotational speed of the prime mover is constant, this requires the transmission to have a broader ratio range, which may be additionally challenging from an Engineering perspective. Providing a design with some variation in prime mover speed can allow a transmission design with a narrower ratio range, which may be beneficial. The constant speed is labelled in the Figure as being 'idle', and one skilled in the art will understand that this encompasses a speed which is above a traditional idle speed, up to for example a speed associated with peak efficiency.

Fig. 6a shows the operation of the hydraulic transmission having a gear box with three gears. Reverse vehicle travel is achieved be selecting first gear, and running the second hydraulic machine 5 in a negative rotation direction. When the vehicle speed command is zero, the commanded rotational speed of the second hydraulic machine 5 is also zero. When the vehicle is accelerated forwards, the rotational speed of the second hydraulic machine 5 increases up to a maximum speed. When this maximum speed of the second hydraulic machine 5 is reached, a first gear shift occurs and the second hydraulic machine 5direction of rotation reverses, from maximum positive to maximum negative. With the second gear selected, the vehicle accelerates further. Within the "urban speed" range, the speed of the second hydraulic machine 5 has a zero crossing, i.e. it changes the direction of rotation from negative to positive, all the while aiming for a smooth vehicle acceleration. The second hydraulic machine 5 then increases rotational speed further until it reaches again the maximum (positive) speed. In this situation a further gear shift occurs. The second hydraulic machine 5 reverses the direction of rotation from positive to negative and starts rotating with maximum (negative) rotational speed. Then, the vehicle accelerates further, in Fig. 6a to some point beyond highway speed.

It can be seen that the gear shifts occur outside the preferred speed ranges. In this case the zero crossing of the speed of the second hydraulic machine 5 is within the preferred speed ranges.

Vehicle direction transition between forwards and reverse is coordinated with rotation direction reversal of the second hydraulic machine 5 (thus zero vehicle speed is coordinated with zero rotation speed of the second hydraulic machine 5). This represents a 'safer default' of the second hydraulic machine 5, to zero vehicle speed. I.e. failure of motor, to zero rotation speed, also leads to 'safe' vehicle speed of zero.

Fig. 6b shows a similar situation. In this case, the rotational speed of the second hydraulic machine 5 is negative and at maximum (i.e. maximum reverse speed) when the vehicle speed is zero. Gear shift occurs outside the preferred vehicle speed ranges and the zero crossing of the rotational speed of the second hydraulic machine 5 is within the preferred speed ranges.

Fig. 6c shows a hydraulic transmission with a gear box having two gears. At zero speed of the vehicle the rotational speed of the second hydraulic machine 5 is negative at maximum. Zero crossing of the rotational speed of the second hydraulic machine 5, i.e. direction reversal, occurs outside the preferred speed ranges which is preferred. Gear shift between the first gear and the second gear occurs also outside the preferred speed ranges.

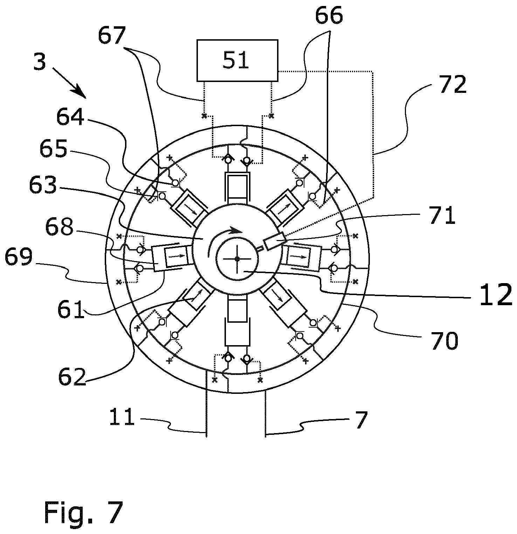

Fig. 7 shows schematically a digital displacement machine, and is an embodiment of the first hydraulic machine 3. Elements already shown in Figs. 1 to 6 are denoted with the same reference numerals.

The digital displacement machine comprises a number of cylinders 61, which are in the present example arranged in the form of a radial piston machine. A piston 62 is movably arranged in each cylinder 61 and driven by a cam 63. Each cylinder 61 together with its piston 62 defines a pressure chamber 68 which is connected to a high pressure valve 64 and a low pressure valve 65. The high pressure valve 64 is connected to the hydraulic circuit 7 by means of a high pressure line 69 and the low pressure valve is connected to the tank port 11 by means of a low pressure line 70. The high pressure valves 64 are connected in a signal transmitting mode to the controller 51 by means of high pressure valve electrical connections 66 and the low pressure valves 65 are likewise connected in a signal transmitting mode to the controller 51 by means of low pressure valve electrical connections 67. A sensor 71 is connected to the controller 51 by means of a sensor line 72. The sensor 71 can be used to detect parameters of the rotation of cam 63 and shaft 12, in particular speed and angle of rotation.

The controller 51 can control the valves 64, 65 of the cylinders 61 independently from each other. This means that each pressure chamber can be filled completely or partly during each working stroke or it can displace no hydraulic fluid at all. It is further possible to use some of the cylinders 61 in a pump mode and some of the cylinders 61 in a motor mode at the same time. In this way it is possible to have in single digital displacement machine two sections 23, 24, as described above.

## Claims

1. A hydraulic transmission (1) comprising a prime mover (2) having a prime mover shaft (50), a first hydraulic machine (3) having a first machine shaft (12), a speed/torque summing assembly (4), a second hydraulic machine (5) having a second machine shaft (17), and driven or driving elements (6), wherein the first machine shaft (12) or the prime mover shaft (50) is torque connected to a first input/output shaft of the speed/torque summing assembly (4), the second machine shaft (17) is torque connected to a second input/output shaft of the speed/torque summing assembly (4), and the driven or driving element or elements (6) are connected to a third input/output shaft of the speed/torque summing assembly (4), **characterized in that** the first hydraulic machine (3) is an electronically commutated machine controlled by a controller (51), and the second hydraulic machine (5) is a machine with fixed commutation, said electronically commutated machine comprises a plurality of working chambers (68) having a volume which varies cyclically with rotation of a rotatable shaft, a hydraulic circuit (7) extending between a group of one or more working chambers (68) of the first hydraulic machine (3) and the second hydraulic machine (5), each working chamber (68) of the first hydraulic machine (3) comprising a low-pressure valve which regulates the flow of hydraulic fluid between the working chamber (68) and a low-pressure manifold and a high-pressure valve which regulates the flow of hydraulic fluid between the working chamber (68) and a high-pressure manifold, the first hydraulic machine (3) being configured to actively control at least the low-pressure valves of the group of one or more working chambers (68) to select the net displacement of hydraulic fluid by each working chamber (68) on each cycle of working chamber volume, and thereby the net displacement of hydraulic fluid by the group of one or more working chambers, responsive to a demand signal.

2. The hydraulic transmission according to claim 1, **characterized in that** the second hydraulic machine (5) is a fixed displacement machine.

3. The hydraulic transmission according to any of claims 1 to 2, **characterized in that** the prime mover shaft (50) is directly torque connected to the first hydraulic machine (3) or the prime mover shaft (50) is torque connected to the first input/output shaft of the speed/torque summing assembly (4) and the first hydraulic machine shaft (3) is torque connected to the driven or driving elements (6).

4. The hydraulic transmission according to any of claims 1 to 3, **characterized in that** the valve arrangement (8) comprises either an H-bridge type hydraulic arrangement comprising four valves (25-28) which are two pressure relief valves (27,28) with parallel checks (33,34) and two actuated blocking valves(25,26), or the valve arrangement (8) comprises a 4-port directional changeover valve, where said 4-port valve or part of the H-bridge arrangement enable selective high pressure fluid connection of either side of the second hydraulic machine a high pressure manifold in fluid connection with to the first hydraulic machine (3), said hydraulic circuit (7) comprises a tank port (10), said tank port connected to a low pressure reservoir (9).

5. The hydraulic transmission according to any of claims 1 to 4, **characterized in that** the first hydraulic machine (3) comprises at least two independently controlled high pressure hydraulic ports (45,46), wherein one of the ports (45) is fluidly connected to an accumulator (20) via an accumulator valve arrangement (21), and another one of the ports (46) is fluidly connected directly to the hydraulic circuit (7).

6. The hydraulic transmission according to any of claims 1 to 5, **characterized in that** in an overrun state in which the second hydraulic machine (5) is operated as a pump, the controller (51) controls the first hydraulic machine (3) to operate as a motor driving the speed/torque summing assembly (4) and/or in a vehicle acceleration state in which the second hydraulic machine (5) is operated as a motor, the controller (51) controls the first hydraulic machine (3) to operate as a pump driving the speed/torque summing assembly (4).

7. The hydraulic transmission according to claim 6, which is part of a vehicle, the transmission comprises the accumulator (20) connected to the hydraulic circuit (7), pressure in the circuit is determined by a state of charge of said accumulator (20), flow through the second machine (5) is determined by a shaft speed of the second machine (5), and power of the second machine (5) is a product of the pressure multiplied by flow through the second machine, and where a mechanical linkage providing torque transmission means between the first and second hydraulic machines (3, 5) allows the first hydraulic machine (3) to transfer an auxiliary power at the driving or driven elements (6), auxiliary power involves compensation by injection or extraction of power arising from or being absorbed by the first hydraulic machine (3) to provide the auxiliary power, said the auxiliary power being generated by controlling the flow, and flow direction, of the first hydraulic machine (3).

8. The hydraulic transmission according to any of claims 1 to 7, **characterized in that** the first hydraulic machine (3) and the second hydraulic machine (5) are fluidly connected by a hydraulic circuit fluidly connected to a low pressure reservoir via a port.

9. The hydraulic transmission according to any of claims 1 to 8, **characterized by** a gear (35) box arranged in a primary energy transmission path between the prime mover (2) and the driven or driving elements (6) or the gear box (35) is arranged in a primary energy transmission path between the speed/torque summing assembly (4) and the driven or driving elements (6), in particular the gear box (35) is arranged in a primary energy transmission path between the prime mover (2) and the speed/torque summing assembly (4).

10. The hydraulic transmission according to claim 9, **characterized in that** the gear box (35) comprises at least two gears and during a gear shift the first hydraulic machine (3) is controlled or the second hydraulic machine (5) is indirectly controlled to reduce a torque at the input of the gear box (35).

11. The hydraulic transmission according to claim 9 or 10, **characterized in that** a rotational speed of the second hydraulic machine (5) is controlled by the controller (51) in a range from a negative to a positive speed and a transmission ratio of at least one of the gears is chosen and the hydraulic size of the hydraulic machines (3, 5) is chosen so that the second hydraulic machine (5) changes rotational direction speed from its maximum negative speed to its maximum positive speed, outside a predetermined speed range of the vehicle, in particular gear shifting occurs outside the predetermined speed range of the vehicle.

12. The hydraulic transmission according to claim 11, **characterized in that** the controller (51) adjusts the rotational speed of the first hydraulic machine (3) so that even during low to zero demand operation, the second hydraulic machine (5) is substantially always rotating, in order to maintain a fluid film between moving surfaces to prolong life of the second hydraulic machine (5).

13. The hydraulic transmission according to claim 11 or 12, **characterized in that** the controller (51) coordinates vehicle transition between forward and reverse travel with the rotational direction reversal of the second hydraulic machine (5).

14. The hydraulic transmission according to any of claims 11 to 13, **characterized in that** the controller (51) changes flow-routing by means of the valve arrangement (25-28) as the vehicle drive torque changes polarity.

15. A method of operating the hydraulic transmission according to any preceding claim, wherein the prime mover is coupled to a first input shaft of the speed/torque summing assembly (4) being able to add or subtract torque, the first hydraulic machine (3) also coupled to the first input/output shaft, or a second or third of the input/output shafts, of the speed/torque summing assembly(4), said first hydraulic machine () being operated to convert shaft power into fluid power or to convert fluid power into shaft power, the second hydraulic machine (5) coupled to one of the remaining shafts of the speed/torque summing assembly (4) which shaft is not coupled to the first hydraulic machine (3), said second hydraulic machine (5) being operated to convert fluid power into shaft power or to convert shaft power into fluid power, the output shaft (19) being coupled to the remaining input/output shaft of the speed/torque summing assembly (4) not coupled to the first or second hydraulic machines,
said transmission being selectively operated in at least one of the following modes;
a first mode where the second hydraulic machine (5) is held static, where the first hydraulic machine (3) is operated in an idle condition, resulting in the natural gear ratio of the speed/torque summing assembly (4) being transferred through,
a second mode where the second hydraulic machine (5) is operated to convert shaft power into fluid power, said fluid power being applied to the first hydraulic machine (3) adding power to input shaft (12), thereby reducing the speed of the output shaft (17) but increasing its torque,
a third mode where the first hydraulic machine (3) being operated to convert shaft power to fluid power, the second hydraulic machine (5) is operated to convert said fluid power into shaft power rotating in the same direction as the input from the prime mover (2) thereby increasing the rotation speed of the output shaft (19),
a fourth mode where the first hydraulic machine (5) is operated to convert shaft power into fluid power the second hydraulic machine (5) being operated to convert said fluid power into shaft power rotating in the opposite direction to the input from the prime (2) mover thereby reversing the direction of rotation of the output shaft (19) of the speed/torque summing assembly (4),
a fifth mode where both the first and second hydraulic machines (3, 5) are operated in an idle mode, thereby allowing the speed and direction of the output shaft (19) of the speed/torque summing assembly (4), to be independent relative to the input shaft (50).
